# EUROPEAN PATENT SPECIFICATION

(11) **EP 3 798 075 B1**
(45) Date of publication and mention of the grant of the patent: **02.08.2023**
(21) Application number: 19199474.8
(22) Date of filing: 25.09.2019
(51) Int. Cl.: B60W 30/165, B60W 30/182

(54) **A METHOD FOR DRIVING A VEHICLE PLATOON**
VERFAHREN ZUM ANTRIEB EINER FAHRZEUGKOLONNE
PROCÉDÉ POUR COMMANDER UN PELOTON DE VÉHICULES

(43) Date of publication of application: 31.03.2021
(73) Proprietor: Ningbo Geely Automobile Research & Development Co. Ltd., Hangzhou Bay New District Ningbo 315336 (CN)
(72) Inventor: BRANDIN, Magnus, 435 38 MÖLNLYCKE (SE); BÖLANDER, Markus, 411 19 GÖTEBORG (SE)
(74) Representative: Zacco Sweden AB

(56) References cited:
- WO-A1-2014/046602
- US-A1- 2019 084 534
- US-A1- 2019 084 540
- US-A1- 2019 171 226

## Description

### TECHNICAL FIELD

The invention relates to a method for driving a vehicle platoon and a control unit for controlling a vehicle platoon.

### BACKGROUND

For the vehicles of a vehicle platoon, the lead vehicle decides on acceleration levels for the other following vehicles of the vehicle platoon. The time gap between vehicles in a vehicle platoon is often relatively short requiring a quick response of the control system. There is however always some time delay before the following vehicles will react and accelerate according to the acceleration of the lead vehicle. The driving style of an operator of the lead vehicle will have a direct impact on the control system response which in turn has an impact on the comfort to the passengers of the following vehicles and the energy used for driving the vehicle platoon.

Document US2019/084540 describes vehicle platoons and strategies for braking the platoons. A braking controller provides brake control of the one or more towed vehicles based on a level of braking force applied to the towing vehicle. A non-enhanced braking mode and an enhanced braking mode are disclosed.

### SUMMARY

An objective of the invention is to provide a method for driving a vehicle platoon, by which method a vehicle platoon can be driven with improved comfort in an energy efficient way.

The objective is achieved by a method for driving a vehicle platoon according to claim 1.

The invention is based on the insight that by such method, the vehicle platoon can be driven in a comfort mode where it can be compensated for the driving behaviour of the lead vehicle operator for achieving a smoother driving of the following vehicles. The first mode can be a default mode for improved comfort and reduced energy consumption. At the same time, the second mode can be a safety mode used only when a critical situation requires a higher or faster control system response.

The "brake map" and "acceleration map" that transform the input including a brake request or an acceleration request to a predetermined output including a brake force or traction force, may comprise one or more lookup tables for achieving the desired mapping.

It is possible to change brake and/or acceleration mode also for the following vehicles for achieving a higher or faster control system response adapted to the control of the lead vehicle.

According to one embodiment of the method, the method comprises the step of providing the first brake map for the first mode and the second brake map for the second mode for braking the lead vehicle, where the first brake map gives a lower brake force change speed than the second brake map for equal brake requests. Hereby, the driver of the lead vehicle is able to use the brakes smoothly and provide improved comfort to the vehicles of the vehicle platoon in the first mode, at the same time as a quicker response can be obtained by shifting from the first mode to the second mode if required.

According to a further embodiment, the method comprises the step of providing the first acceleration map for the first mode and the second acceleration map for the second mode for accelerating the lead vehicle, where the first accelerating map gives a lower traction force change speed than the second acceleration map for equal acceleration requests. Hereby, the driver of the lead vehicle is able to avoid jerky driving which would have a negative impact on the entire vehicle platoon. The comfort is improved and the energy consumption is reduced, at the same time as a quicker response can be obtained by shifting from the first mode to the second mode.

According to a further embodiment, the method comprises the step of shifting from the first mode to the second mode when a brake pedal position of the lead vehicle is changed with a speed exceeding a predetermined threshold value. The speed of the brake pedal can be detected and used for shifting brake modes, and a high speed of the brake pedal can be used as an indicator that a safety mode is required.

According to a further embodiment, the method comprises the step of shifting from the first mode to the second mode when a brake pedal speed change of the lead vehicle exceeds a predetermined threshold value. The speed change of the brake pedal can be detected and used for shifting brake modes, and a high speed change of the brake pedal can be used as an indicator that a safety mode is required.

According to a further embodiment, the method comprises the step of shifting from the first mode to the second mode when a brake pedal of the lead vehicle is moved a distance exceeding a predetermined threshold value. The position of the brake pedal can be detected and used for shifting brake modes, and if the brake pedal has been moved a large distance, this can be used as an indicator that a safety mode is required.

According to a further embodiment, the method comprises the step of shifting from the first mode to the second mode when an accelerator pedal position of the lead vehicle is changed with a speed exceeding a predetermined threshold value. The speed of the acceleration pedal can be detected and used for shifting acceleration modes, and a high speed of the acceleration pedal can be used as an indicator that a safety mode is required.

According to a further embodiment, the method comprises the step of shifting from the first mode to the second mode when an accelerator pedal speed change of the lead vehicle exceeds a predetermined threshold value. The speed change of the acceleration pedal can be detected and used for shifting acceleration modes, and a high speed change of the acceleration pedal can be used as an indicator that a safety mode is required.

According to a further embodiment, the method comprises the step of shifting from the first mode to the second mode when an accelerator pedal of the lead vehicle is moved a distance exceeding a predetermined threshold value. The position of the acceleration pedal can be detected and used for shifting acceleration modes, and if the acceleration pedal has been moved a large distance, this can be used as an indicator that a safety mode is required.

According to another aspect of the invention, a further objective is to provide a control unit for controlling a vehicle platoon, by which control unit a vehicle platoon can be driven with improved comfort in an energy efficient way.

This objective is achieved by a control unit for controlling a vehicle platoon according to claim 11.

The advantages of the control unit are similar to the advantages already discussed hereinabove with reference to the different embodiments of the method.

Further advantages and advantageous features of the invention are disclosed in the following description and in the claims.

### BRIEF DESCRIPTION OF THE DRAWINGS

With reference to the appended drawings, below follows a more detailed description of embodiments of the invention cited as examples.

In the drawings:
Fig. 1 shows a vehicle platoon,
Fig. 2 shows two vehicle platoons driving in different lanes of a road,
Fig. 3 is a schematic view of a control unit for controlling a brake and a drive unit of a lead vehicle of a vehicle platoon,
Fig. 4 shows an example of a lookup table of a brake map,
Fig. 5 shows a further example of a lookup table for a brake map,
Fig. 6 shows shifting from a first mode to a second mode where the vehicle output is gradually increased, and
Fig. 7 shows shifting from a first mode to a second mode where the vehicle output is substantially instantaneously increased.

### DETAILED DESCRIPTION OF EXAMPLE EMBODIMENTS

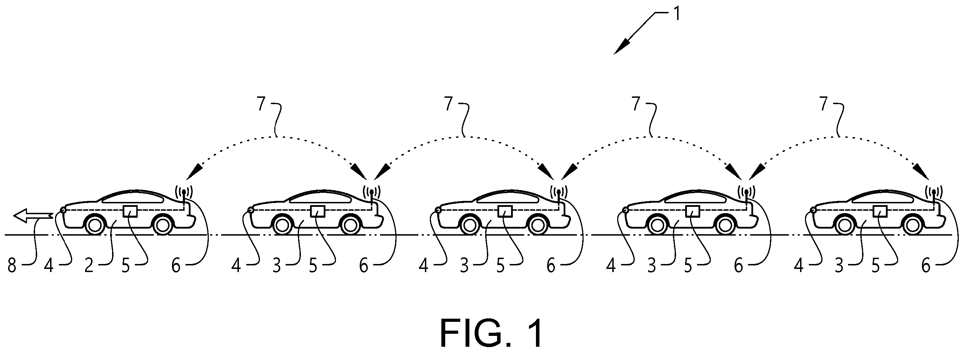

Fig. 1 shows a vehicle platoon 1 having a lead vehicle 2 and a plurality of following vehicles 3. The lead vehicle 2 and the following vehicles 3 are individual vehicles but driven together as a group or convoy. The following vehicles 3 are positioned in a line after the lead vehicle 2. The driving direction is indicated with an arrow 8. The lead vehicle 2 is at least partly controlled by an operator of the lead vehicle. The following vehicles 3 of the vehicle platoon are suitably automatically controlled without any driver assistance.

When driving in the vehicle platoon 1, the following vehicles 3 are controlled to follow the lead vehicle 2 or the vehicle closest to the front, such that when the speed of the lead vehicle 2 is increased/decreased the speed of the following vehicles 3 is increased/decreased correspondingly for maintaining or achieving the desired distances and time gaps between the vehicles. Further, when the lead vehicle 2 is changing driving direction, a following vehicle 3 will also change driving direction and follow the lead vehicle or rather the vehicle closest to the front.

For enabling the vehicles 2, 3 to be controlled, each vehicle can be provided with any suitable sensor equipment 4 for receiving information about the environment, and a control unit 5 for controlling the vehicle. The sensor equipment can give information about at least the vehicle closest to the front, but preferably the sensor equipment is covering 360 degrees around the vehicle for obtaining the information that is required for longitudinal and lateral control of the vehicle. Such sensor equipment 4 may comprise lidar, radar and ultrasonic sensors, cameras, etc. The information received by the sensor equipment is used by the control unit 5 for controlling the driving behaviour of the vehicle. In addition, maps, GPS, etc., can be used for determining the current position of a vehicle platoon or an individual vehicle of a vehicle platoon.

Alternatively or in addition to the sensor equipment 4, each vehicle 2, 3 is provided with a communication unit 6 for communicating with one or more of the other vehicles of the vehicle platoon 1. Such a communication unit 6 may comprise any suitable components for establish communication between the vehicles. For example, the communication unit 6 may comprise a transmitter and a receiver based on radio waves or microwaves. In other words, each vehicle can be part of a local network for communication 7 between the vehicles of the vehicle platoon 1. By means of the local network, control signals can be transmitted from one vehicle to another vehicle. The control signals received are then used by the control unit 5 arranged on the vehicle for controlling the driving behaviour of the vehicle. Such control signals received by the following vehicles 3 are preferably at least initially transmitted by the lead vehicle 2.

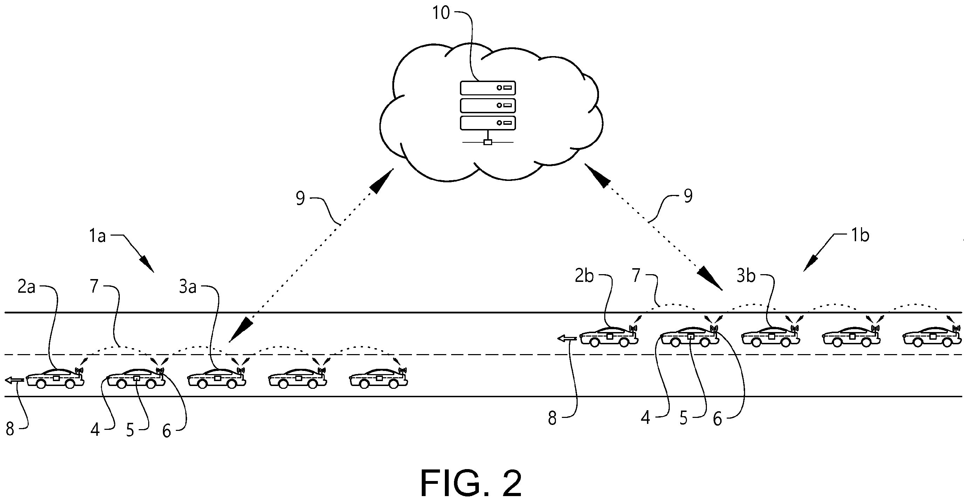

Fig. 2 shows two vehicle platoons 1a, 1b driving in different lanes of a road. Each vehicle platoon 1a, 1b of the current traffic system is also part of a central network for communication 9 between the vehicle platoon 1a, 1b and a central control unit 10. By means of the central network, control signals can be transmitted from the central control unit 10 to a vehicle platoon 1a, 1b for controlling the driving behaviour of the vehicle platoon. Such control signals are preferably received by the lead vehicle 2a, 2b of the vehicle platoon, but could also be received by one or more of the following vehicles 3 of the vehicle platoon. The central control unit 10 can be part of a server of a wireless network, such as Internet, for cloud computing.

The central control unit 10 and the local control unit 5 arranged on a vehicle may comprise one or more microprocessors and/or one or more memory devices or any other components for executing computer programs to perform the method described hereinafter. Thus, the central control unit and/or the local control unit is preferably provided with a computer program comprising program code means for performing the steps of any example embodiment of the method described hereinafter.

For controlling a vehicle platoon or an individual vehicle of the vehicle platoon, preferably both the control unit 5 of the vehicle and the central control unit 10 are used in cooperation.

Alternatively or in addition to what has been described hereinabove, sensors can be arranged in the environment to the current road where the vehicle platoon is driven. These sensors may provide information to be received by the control unit 5 and/or the central control unit 10. Such sensors could be a complement to the sensors of the vehicles, giving further information and/or redundancy to the system.

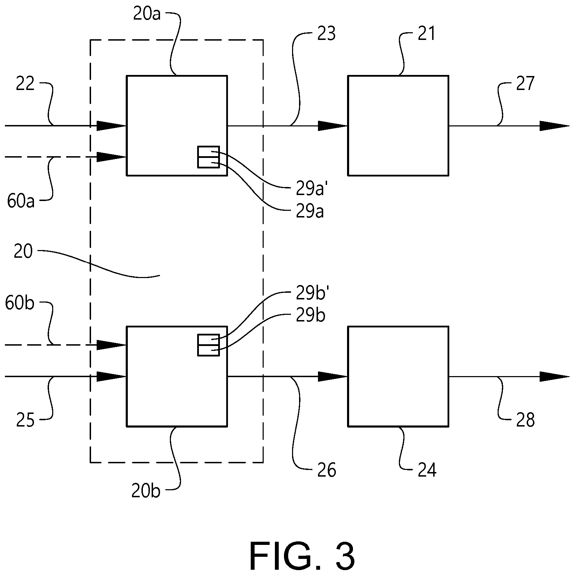

The upper part of Fig. 3 is a schematic view of a control unit 20a for controlling a brake 21 of a lead vehicle of a vehicle platoon. A brake request signal 22 is input to the control unit 20a comprising brake maps 29a, 29a'. A brake force signal 23 is output from the control unit 20 and input to the brake 21. The brake force signal 23 is used for controlling braking of the vehicle. The brake 21 can be any suitable equipment such as a disc brake, a part of a drive line, engine braking, etc., for generating a brake force braking the vehicle. The brake request signal 22 is generated by an action of the the operator of the lead vehicle, for example by means of pushing a brake pedal. The brake request signal 22 can be a function of the brake pedal position.

The lower part of Fig. 3 is a schematic view of a control unit 20b for controlling a drive line 24 of a lead vehicle of a vehicle platoon. An acceleration request signal 25 is input to the control unit 20b comprising acceleration maps 29b, 29b'. A traction force signal 26 is output from the control unit 20b. The traction force signal 26 is used for controlling acceleration of the vehicle. The drive line 24 can comprise any suitable equipment such as an engine, an electric motor, etc., for generating a traction force accelerating the vehicle. The acceleration request signal 25 is generated by an action of the operator of the lead vehicle, for example by means of pushing an acceleration pedal. The acceleration request signal 25 can be a function of the acceleration pedal position.

Although separate chart flows have been used in Fig. 3 for illustrating the brake force control and the traction force control, the control unit 20a for controlling the brake and the control unit 20b for controlling the drive line could be one and the same control unit or at least be integrated in the same unit. For simplifying, reference is made to the control unit 20 hereinafter when referring to the control unit 20a for controlling the brake and/or the control unit 20b for controlling the drive line.

Further, this control unit 20 can be included in the control unit 5 arranged on the vehicle.

The control unit 20 is configured to provide a first mode and a second mode for the lead vehicle. The first mode and the second mode are achieved by using a first brake map 29a for the first mode and a second brake map 29a' for the second mode for controlling the brake 21 of the lead vehicle. The first brake map 29a gives a lower brake force 27 on the lead vehicle 2 than the second brake map 29a' for equal brake requests 22. Alternatively or in addition to the first brake map and the second brake map, the first mode and the second mode are achieved by using a first acceleration map 29b for the first mode and a second acceleration map 29b' for the second mode for controlling the drive unit 24 of the lead vehicle. The first acceleration map 29b gives a lower traction force 28 on the lead vehicle 2 than the second acceleration map 29b' for equal acceleration requests 25.

The lower brake force output and the lower traction force output for the first mode in comparison to the second mode is applied for at least a significant part of the brake request interval and the acceleration request interval, respectively.

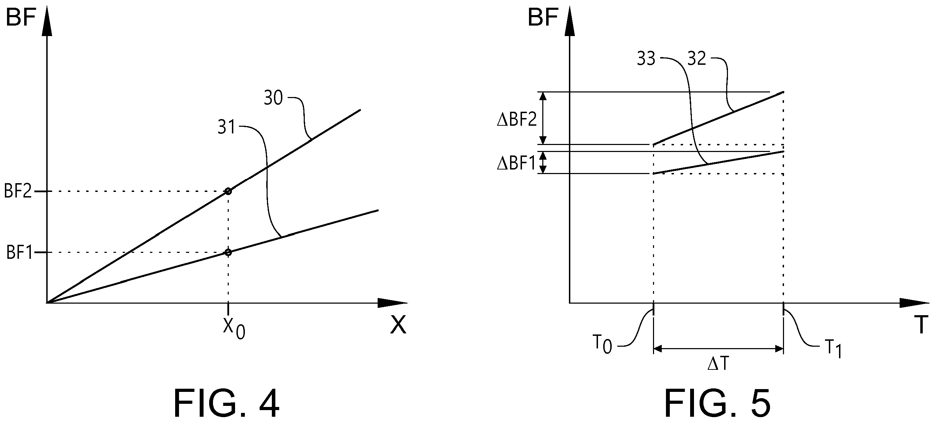

Fig. 4 shows an example of a lookup table of a brake map. In the graph, the horizontal axis represents the position X of the brake pedal and the vertical axis represents the brake force BF. The upper line 30 shows brake force as a function of brake pedal position for the second mode, and the line 31 below shows brake force as a function of brake pedal position for the first mode. As appears in the graph, for the same brake pedal position xo, the brake force BF2 for the second mode is larger than the brake force BF1 for the first mode.

When the control unit 20 is configured to provide the first brake map 29a for the first mode and the second brake map 29a' for the second mode for controlling the brake 21, the first brake map can give a lower brake force change speed than the second brake map for equal brake requests 22. In other words, when increased braking of the lead vehicle 2 is requested, the response is slower in the first mode than in the second mode.

Fig. 5 shows an example of a lookup table for a brake map. In the graph, the horizontal axis represents time T and the vertical axis represents the brake force BF. The upper line 32 shows brake force as a function of time for the second mode, and the line 33 below shows brake force as a function of time for the first mode. The graph illustrates that at a time point T₀, the brake pedal has been moved a certain distance Δx. Then, the brake force is increased during ΔT from To to T₁. As appears from the graph, for the same time period ΔT, the change in brake force ΔBF2 for the second mode is larger than the change in brake force ΔBF1 for the first mode. Thus, the brake force change speed is higher in the second mode than in the first mode.

Correspondingly, when the control unit 20 is configured to provide the first acceleration map 29b for the first mode and the second acceleration map 29b' for the second mode for controlling the drive unit 24, the first accelerating map can give a lower traction force change speed than the second acceleration map for equal acceleration requests. In other words, when increased acceleration of the lead vehicle 2 is requested, the response is slower in the first mode than in the second mode.

The first mode can be a comfort mode providing smoother driving and reduced energy consumption. The first mode can be selected by the operator of the lead vehicle or automatically activated as a default mode.

The control unit 20 is further configured to shift from the first mode to the second mode when receiving an input signal 60a, 60b indicating that an operator of the lead vehicle 2 has performed a predetermined driving action. See Fig. 3. The input signal 60a, 60b can be the same signal or part of the brake request signal 22 or the acceleration request signal 25, or be a separate signal. The second mode can be a safety mode in which the manoeuvrability of the vehicle is prioritized over comfort and energy consumption. The predetermined driving action is suitably such an action which the operator is supposed to perform in case of a critical situation where maximal deceleration or acceleration is desired.

For example, such driving actions can be one or more of the following cases: a brake pedal position of the lead vehicle is changed with a speed exceeding a predetermined threshold value, a brake pedal speed change of the lead vehicle exceeds a predetermined threshold value, and a brake pedal of the lead vehicle is moved a distance exceeding a predetermined threshold value. Furthermore, such driving actions can be one or more of the following cases: an acceleration pedal position of the lead vehicle is changed with a speed exceeding a predetermined threshold value, an acceleration pedal speed change of the lead vehicle exceeds a predetermined threshold value, and an acceleration pedal of the lead vehicle is moved a distance exceeding a predetermined threshold value.

In addition to the possibility for an operator of the lead vehicle to shift modes by performing a predetermined driving action, in case of an identified increased risk level (which may not have been perceived by the operator) for the lead vehicle or the entire vehicle platoon, shifting from the first mode to the second mode can also be performed automatically by a control unit 5 arranged on the vehicle or a central control unit 10 without any action from the operator. The increased risk level can be detected by any sensor equipment of a vehicle of the vehicle platoon or identified by any external system providing information about the current traffic situation.

Also when describing the method herein, reference to Figs. 1-7 is made.

The method comprises the steps of providing a first mode and a second mode for driving the lead vehicle, by using a first brake map 29a for the first mode and a second brake map 29a' for the second mode for braking the lead vehicle 2. The first brake map 29a gives a lower brake force on the lead vehicle than the second brake map 29a' for equal brake requests 22. Alternatively or in addition to the first brake map and the second brake map, the first mode and the second mode is achieved by using a first acceleration map 29b for the first mode and a second acceleration map 29b' for the second mode for accelerating the lead vehicle 2. The first acceleration map 29b gives a lower traction force on the lead vehicle than the second acceleration map 29b' for equal acceleration requests 25. The method also comprises the step of shifting from the first mode to the second mode when an operator of the lead vehicle 2 has performed a predetermined driving action.

The method can comprise the step of communicating to one or more of the plurality of following vehicles 3 that a shift from the first mode to the second mode for the lead vehicle 2 has taken place. This information can be used by a control unit 5 of a following vehicle for adapting the control system response of the following vehicle to the current mode of the lead vehicle. For following the lead vehicle when driven in the second mode, a higher or faster control system response of the following vehicle is suitably used.

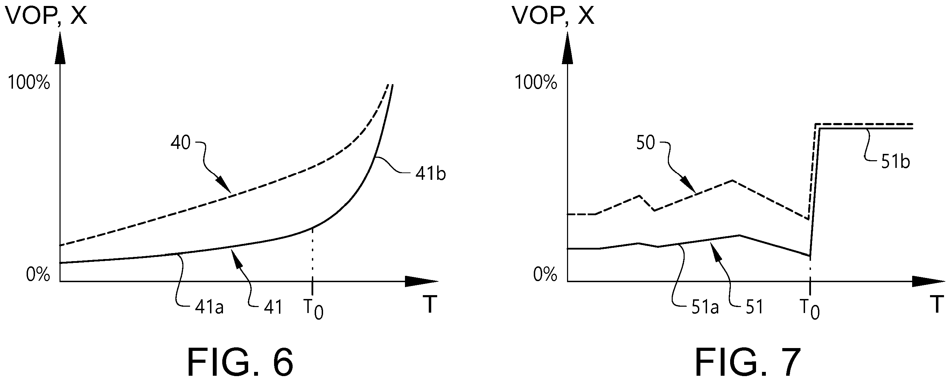

Figs. 6 and 7 show two examples of graphs illustrating vehicle output and pedal position when shifting from the first mode to the second mode. The vehicle output can be brake force or traction force (acceleration) and the pedal can be a brake pedal or an acceleration pedal.

In Fig. 6, the graph shows vehicle output VOP and pedal position X versus time T. A first curve 40 which is illustrated by a dotted line, shows the pedal position as a function of the time. A second curve 41 which is illustrated by a solid line, shows the vehicle output as a function of time. Before a time point To, the first mode is used and the vehicle output VOP varies with the time (and the pedal position) as indicated by the curve portion 41a provided in the first mode. At To there is a shift from the first mode to the second mode. After the time point To, the second mode is used and the vehicle output VOP varies with the time (and the pedal position) as indicated by the curve portion 41b provided in the second mode. The vehicle output is gradually increased when shifting from the first mode to the second mode. The shifting from the first mode to the second mode can be induced in any way as previously described hereinabove.

In Fig. 7, the graph shows vehicle output VOP and pedal position X versus time T. A first curve 50 which is illustrated by a dotted line, shows the pedal position as a function of the time. A second curve 51 which is illustrated by a solid line, shows the vehicle output as a function of time. Before a time point To, the first mode is used and the vehicle output VOP varies with the time (and the pedal position) as indicated by the curve portion 51a provided in the first mode. At To there is a shift from the first mode to the second mode. After the time point To, the second mode is used and the vehicle output VOP varies with the time (and the pedal position) as indicated by the curve portion 51b provided in the second mode. The vehicle output is substantially instantaneously increased when shifting from the first mode to the second mode. The shifting from the first mode to the second mode can be induced in any way as previously described hereinabove.

It should be stressed that all example embodiments and features disclosed when describing how the control unit is configured, can be applied in the method, and for all example embodiments and features disclosed when describing the method, the control unit can be configured accordingly.

It is to be understood that the present invention is not limited to the embodiments described above and illustrated in the drawings; rather, the skilled person will recognize that many changes and modifications may be made within the scope of the appended claims.

## Claims

1. A method for driving a vehicle platoon (1) having a lead vehicle (2) and a plurality of vehicles (3) following the lead vehicle, the method comprising the steps of providing a first mode and a second mode for driving the lead vehicle (2), by using a first brake map (29a) for the first mode and a second brake map (29a') for the second mode for braking the lead vehicle (2), the first brake map giving a lower brake force (27) on the lead vehicle than the second brake map for equal brake requests (22), and/or by using a first acceleration map (29b) for the first mode and a second acceleration map (29b') for the second mode for accelerating the lead vehicle (2), the first acceleration map giving a lower traction force (28) on the lead vehicle than the second acceleration map for equal acceleration requests (25), and shifting from the first mode to the second mode when an operator of the lead vehicle (2) has performed a predetermined driving action, and communicating to one or more of the plurality of following vehicles (3) that a shift from the first mode to the second mode for the lead vehicle (2) has taken place.

2. A method according to claim 1, **characterized by** providing the first brake map (29a) for the first mode and the second brake map (29a') for the second mode for braking the lead vehicle (2), the first brake map giving a lower brake force change speed than the second brake map for equal brake requests.

3. A method according to claim 1 or 2, **characterized by** providing the first acceleration map (29b) for the first mode and the second acceleration map (29b') for the second mode for accelerating the lead vehicle (2), the first accelerating map giving a lower traction force change speed than the second acceleration map for equal acceleration requests.

4. A method according to any preceding claim, **characterized by** shifting from the first mode to the second mode when a brake pedal position of the lead vehicle (2) is changed with a speed exceeding a predetermined threshold value.

5. A method according to any preceding claim, **characterized by** shifting from the first mode to the second mode when a brake pedal speed change of the lead vehicle (2) exceeds a predetermined threshold value.

6. A method according to any preceding claim, **characterized by** shifting from the first mode to the second mode when a brake pedal of the lead vehicle (2) is moved a distance exceeding a predetermined threshold value.

7. A method according to any preceding claim, **characterized by** shifting from the first mode to the second mode when an accelerator pedal position of the lead vehicle (2) is changed with a speed exceeding a predetermined threshold value.

8. A method according to any preceding claim, **characterized by** shifting from the first mode to the second mode when an accelerator pedal speed change of the lead vehicle (2) exceeds a predetermined threshold value.

9. A method according to any preceding claim, **characterized by** shifting from the first mode to the second mode when an accelerator pedal of the lead vehicle (2) is moved a distance exceeding a predetermined threshold value.

10. A method according to any preceding claim, **characterized by** shifting from the first mode to the second mode for the lead vehicle (2) when an increased risk level for a vehicle (2, 3) of the vehicle platoon (1) or the entire vehicle platoon (1) is identified.

11. A control unit (20) for controlling a vehicle platoon (1) having a lead vehicle (2) and a plurality of vehicles (3) following the lead vehicle, the control unit (20) is configured to provide a first mode and a second mode for the lead vehicle (2), by using a first brake map (29a) for the first mode and a second brake map (29a') for the second mode for controlling a brake (21) of the lead vehicle (2), the first brake map (29a) giving a lower brake force on the lead vehicle (2) than the second brake map (29a') for equal brake requests (22), and/or by using a first acceleration map (29b) for the first mode and a second acceleration map (29b') for the second mode for controlling a drive unit (24) of the lead vehicle (2), the first acceleration map (29b) giving a lower traction force on the lead vehicle (2) than the second acceleration map (29b') for equal acceleration requests (25), and the control unit (20) is configured to shift from the first mode to the second mode when receiving an input signal (60a, 60b) indicating that an operator of the lead vehicle (2) has performed a predetermined driving action, and to communicate to one or more of the plurality of following vehicles (3) that a shift from the first mode to the second mode for the lead vehicle (2) has taken place.

12. A computer program comprising program code means for performing a method according to any of claims 1-10.

13. A lead vehicle (2) for a vehicle platoon (1), the lead vehicle (2) comprising a control unit (20) according to claim 11.

14. A vehicle platoon (1) comprising a lead vehicle (2) and a plurality of following vehicles (3), the lead vehicle (2) comprising a control unit (20) according to claim 11.

## Patentansprüche

1. Verfahren zum Fahren einer Fahrzeugkolonne (1), die ein Leitfahrzeug (2) und eine Vielzahl von Fahrzeugen (3), die dem Leitfahrzeug folgt, aufweist, wobei das Verfahren die folgenden Schritte umfasst: Bereitstellen eines ersten Modus und eines zweiten Modus zum Fahren des Leitfahrzeugs (2) durch Verwenden eines ersten Bremskennfelds (29a) für den ersten Modus und eines zweiten Bremskennfelds (29a') für den zweiten Modus zum Bremsen des Leitfahrzeugs (2), wobei für gleiche Bremsanforderungen (22) das erste Bremskennfeld eine niedrigere Bremskraft (27) an dem Leitfahrzeug ergibt als das zweite Bremskennfeld, und/oder durch Verwenden eines ersten Beschleunigungskennfelds (29b) für den ersten Modus und eines zweiten Beschleunigungskennfelds (29b') für den zweiten Modus zum Beschleunigen des Leitfahrzeugs (2), wobei für gleiche Beschleunigungsanforderungen (25) das erste Beschleunigungskennfeld eine niedrigere Traktionskraft (28) an dem Leitfahrzeug ergibt als das zweite Beschleunigungskennfeld, und Umschalten von dem ersten Modus auf den zweiten Modus, wenn ein Bediener des Leitfahrzeugs (2) eine vorbestimmte Fahraktion durchgeführt hat, und Kommunizieren an eines oder mehrere der Vielzahl von folgenden Fahrzeugen (3), dass eine Umschaltung von dem ersten Modus auf den zweiten Modus für das Leitfahrzeug (2) stattgefunden hat.

2. Verfahren nach Anspruch 1, **gekennzeichnet durch** Bereitstellen des ersten Bremskennfelds (29a) für den ersten Modus und des zweiten Bremskennfelds (29a') für den zweiten Modus zum Bremsen des Leitfahrzeugs (2), wobei für gleiche Bremsanforderungen das erste Bremskennfeld eine niedrigere Bremskraftänderungsgeschwindigkeit ergibt als das zweite Bremskennfeld.

3. Verfahren nach Anspruch 1 oder 2, **gekennzeichnet durch** Bereitstellen des ersten Beschleunigungskennfelds (29b) für den ersten Modus und des zweiten Beschleunigungskennfelds (29b') für den zweiten Modus zum Beschleunigen des Leitfahrzeugs (2), wobei für gleiche Beschleunigungsanforderungen das erste Beschleunigungskennfeld eine niedrigere Traktionskraftänderungsgeschwindigkeit ergibt als das zweite Beschleunigungskennfeld.

4. Verfahren nach einem der vorhergehenden Ansprüche, **gekennzeichnet durch** Umschalten von dem ersten Modus auf den zweiten Modus, wenn eine Bremspedalposition des Leitfahrzeugs (2) mit einer Geschwindigkeit geändert wird, die einen vorbestimmten Schwellenwert übersteigt.

5. Verfahren nach einem der vorhergehenden Ansprüche, **gekennzeichnet durch** Umschalten von dem ersten Modus auf den zweiten Modus, wenn eine Bremspedalgeschwindigkeitsänderung des Leitfahrzeugs (2) einen vorbestimmten Schwellenwert übersteigt.

6. Verfahren nach einem der vorhergehenden Ansprüche, **gekennzeichnet durch** Umschalten von dem ersten Modus auf den zweiten Modus, wenn ein Bremspedal des Leitfahrzeugs (2) um eine Strecke bewegt wird, die einen vorbestimmten Schwellenwert übersteigt.

7. Verfahren nach einem der vorhergehenden Ansprüche, **gekennzeichnet durch** Umschalten von dem ersten Modus auf den zweiten Modus, wenn eine Fahrpedalposition des Leitfahrzeugs (2) mit einer Geschwindigkeit geändert wird, die einen vorbestimmten Schwellenwert übersteigt.

8. Verfahren nach einem der vorhergehenden Ansprüche, **gekennzeichnet durch** Umschalten von dem ersten Modus auf den zweiten Modus, wenn eine Fahrpedalgeschwindigkeitsänderung des Leitfahrzeugs (2) einen vorbestimmten Schwellenwert übersteigt.

9. Verfahren nach einem der vorhergehenden Ansprüche, **gekennzeichnet durch** Umschalten von dem ersten Modus auf den zweiten Modus, wenn ein Fahrpedal des Leitfahrzeugs (2) um eine Strecke bewegt wird, die einen vorbestimmten Schwellenwert übersteigt.

10. Verfahren nach einem der vorhergehenden Ansprüche, **gekennzeichnet durch** Umschalten von dem ersten Modus auf den zweiten Modus für das Leitfahrzeug (2), wenn ein erhöhtes Risikoniveau für ein Fahrzeug (2, 3) der Fahrzeugkolonne (1) oder die gesamte Fahrzeugkolonne (1) identifiziert wird.

11. Steuereinheit (20) zum Steuern einer Fahrzeugkolonne (1), die ein Leitfahrzeug (2) und eine Vielzahl von Fahrzeugen (3), die dem Leitfahrzeug folgt, aufweist, wobei die Steuereinheit (20) konfiguriert ist zum Bereitstellen eines ersten Modus und eines zweiten Modus für das Leitfahrzeug (2) durch Verwenden eines ersten Bremskennfelds (29a) für den ersten Modus und eines zweiten Bremskennfelds (29a') für den zweiten Modus zum Steuern einer Bremse (21) des Leitfahrzeugs (2), wobei für gleiche Bremsanforderungen (22) das erste Bremskennfeld (29a) eine niedrigere Bremskraft an dem Leitfahrzeug (2) ergibt als das zweite Bremskennfeld (29a'), und/oder durch Verwenden eines ersten Beschleunigungskennfelds (29b) für den ersten Modus und eines zweiten Beschleunigungskennfelds (29b') für den zweiten Modus zum Steuern einer Antriebseinheit (24) des Leitfahrzeugs (2), wobei für gleiche Beschleunigungsanforderungen (25) das erste Beschleunigungskennfeld (29b) eine niedrigere Traktionskraft an dem Leitfahrzeug (2) ergibt als das zweite Beschleunigungskennfeld (29b'), und die Steuereinheit (20) konfiguriert ist zum Umschalten von dem ersten Modus auf den zweiten Modus, wenn ein Eingangssignal (60a, 60b) empfangen wird, das angibt, dass ein Bediener des Leitfahrzeugs (2) eine vorbestimmte Fahraktion durchgeführt hat, und zum Kommunizieren an eines oder mehrere der Vielzahl von folgenden Fahrzeugen (3), dass eine Umschaltung von dem ersten Modus auf den zweiten Modus für das Leitfahrzeug (2) stattgefunden hat.

12. Computerprogramm, umfassend Programmcodemittel zum Durchführen eines Verfahrens nach einem der Ansprüche 1-10.

13. Leitfahrzeug (2) für eine Fahrzeugkolonne (1), wobei das Leitfahrzeug (2) eine Steuereinheit (20) nach Anspruch 11 umfasst.

14. Fahrzeugkolonne (1), umfassend ein Leitfahrzeug (2) und eine Vielzahl von folgenden Fahrzeugen (3), wobei das Leitfahrzeug (2) eine Steuereinheit (20) nach Anspruch 11 umfasst.

## Revendications

1. Procédé pour commander un peloton de véhicules (1) ayant un véhicule de tête (2) et une pluralité de véhicules (3) suivant le véhicule de tête, le procédé comprenant les étapes de fourniture d'un premier mode et d'un second mode pour commander le véhicule de tête (2), à l'aide d'une première carte de freinage (29a) pour le premier mode et d'une seconde carte de freinage (29a') pour le second mode pour freiner le véhicule de tête (2), la première carte de freinage donnant une force de freinage inférieure (27) sur le véhicule de tête par rapport à la seconde carte de freinage pour des demandes de freinage égales (22), et/ou à l'aide d'une première carte d'accélération (29b) pour le premier mode et d'une seconde carte d'accélération (29b') pour le second mode pour accélérer le véhicule de tête (2), la première carte d'accélération donnant une force de traction inférieure (28) sur le véhicule de tête par rapport à la seconde carte d'accélération pour des demandes d'accélération égales (25), et le passage du premier mode au second mode lorsqu'un opérateur du véhicule de tête (2) a effectué une action de conduite prédéterminée, et la communication à un ou plusieurs de la pluralité de véhicules suivants (3) qu'un passage du premier mode au second mode pour le véhicule de tête (2) a eu lieu.

2. Procédé selon la revendication 1, **caractérisé par** la fourniture de la première carte de freinage (29a) pour le premier mode et la seconde carte de freinage (29a') pour le second mode de freinage du véhicule de tête (2), la première carte de freinage donnant une vitesse de changement de force de freinage inférieure à la seconde carte de freinage pour des demandes de freinage égales.

3. Procédé selon la revendication 1 ou 2, **caractérisé par** la fourniture de la première carte d'accélération (29b) pour le premier mode et la seconde carte d'accélération (29b') pour le second mode pour accélérer le véhicule de tête (2), la première carte d'accélération donnant une vitesse de changement de force de traction inférieure à la seconde carte d'accélération pour des demandes d'accélération égales.

4. Procédé selon une quelconque revendication précédente, **caractérisé par** le passage du premier mode au second mode lorsqu'une position de la pédale de frein du véhicule de tête (2) est modifiée avec une vitesse dépassant une valeur seuil prédéterminée.

5. Procédé selon une quelconque revendication précédente, **caractérisé par** le passage du premier mode au second mode lorsqu'un changement de vitesse de pédale de frein du véhicule de tête (2) dépasse une valeur seuil prédéterminée.

6. Procédé selon une quelconque revendication précédente, **caractérisé par** le passage du premier mode au second mode lorsqu'une pédale de frein du véhicule de tête (2) est déplacée d'une distance dépassant une valeur seuil prédéterminée.

7. Procédé selon une quelconque revendication précédente, **caractérisé par** le passage du premier mode au second mode lorsqu'une position de pédale d'accélérateur du véhicule de tête (2) est modifiée avec une vitesse dépassant une valeur seuil prédéterminée.

8. Procédé selon une quelconque revendication précédente, **caractérisé par** le passage du premier mode au second mode lorsqu'un changement de vitesse de pédale d'accélérateur du véhicule de tête (2) dépasse une valeur seuil prédéterminée.

9. Procédé selon une quelconque revendication précédente, **caractérisé par** le passage du premier mode au second mode lorsqu'une pédale d'accélérateur du véhicule de tête (2) est déplacée d'une distance dépassant une valeur seuil prédéterminée.

10. Procédé selon une quelconque revendication précédente, **caractérisé par** le passage du premier mode au second mode pour le véhicule de tête (2) lorsqu'un niveau de risque accru pour un véhicule (2, 3) du peloton de véhicules (1) ou du peloton de véhicules entier (1) est identifié.

11. Unité de commande (20) pour commander un peloton de véhicules (1) ayant un véhicule de tête (2) et une pluralité de véhicules (3) suivant le véhicule de tête, l'unité de commande (20) est configurée pour fournir un premier mode et un second mode pour le véhicule de tête (2), à l'aide d'une première carte de freinage (29a) pour le premier mode et d'une seconde carte de freinage (29a') pour le second mode pour commander un frein (21) du véhicule de tête (2), la première carte de freinage (29a) donnant une force de freinage inférieure sur le véhicule de tête (2) par rapport à la seconde carte de freinage (29a') pour des demandes de freinage égales (22), et/ou à l'aide d'une première carte d'accélération (29b) pour le premier mode et d'une seconde carte d'accélération (29b') pour le second mode de commande d'un groupe motopropulseur (24) du véhicule de tête (2), la première carte d'accélération (29b) donnant une force de traction inférieure sur le véhicule de tête (2) par rapport à la seconde carte d'accélération (29b') pour des demandes d'accélération égales (25), et l'unité de commande (20) est configurée pour passer du premier mode au second mode lors de la réception d'un signal d'entrée (60a, 60b) indiquant qu'un opérateur du véhicule de tête (2) a exécuté une action de conduite prédéterminée, et pour communiquer à un ou plusieurs de la pluralité de véhicules suivants (3) qu'un passage du premier mode au second mode pour le véhicule de tête (2) a eu lieu.

12. Programme informatique comprenant un moyen de code de programme pour exécuter un procédé selon l'une quelconque des revendications 1 à 10.

13. Véhicule de tête (2) pour un peloton de véhicules (1), le véhicule de tête (2) comprenant une unité de commande (20) selon la revendication 11.

14. Peloton de véhicules (1) comprenant un véhicule de tête (2) et une pluralité de véhicules suivants (3), le véhicule de tête (2) comprenant une unité de commande (20) selon la revendication 11.
